# FASCICULE DE BREVET EUROPEEN

(11) **EP 1 893 467 B1**
(45) Date de publication et mention de la délivrance du brevet: **04.03.2009**
(21) Numéro de dépôt: 05776457.3
(22) Date de dépôt: 14.06.2005
(51) Int. Cl.: B62D 7/15, F15B 20/00

(54) **DISPOSITIF DE COMMANDE DE DIRECTION DE VEHICULE INDUSTRIEL ET VEHICULE EQUIPE D'UN TEL DISPOSITIF**
VORRICHTUNG ZUR STEUERUNG DER LENKUNG EINES INDUSTRIEFAHRZEUGS UND SOLCH EINE VORRICHTUNG UMFASSENDES FAHRZEUG
DEVICE FOR CONTROLLING THE STEERING OF A COMMERCIAL VEHICLE, AND VEHICLE COMPRISING ONE SUCH DEVICE

(43) Date de publication de la demande: 05.03.2008
(73) Titulaire: VOLVO COMPACT EQUIPMENT SAS, 01300 Belley (FR)
(72) Inventeur: FLOREAN, Gilles, F-68630 Bennwihr (FR)
(74) Mandataire: Putet, Gilles
(86) Numéro de dépôt international: PCT/FR2005/050444
(87) Numéro de publication internationale: WO 2006/134239

(56) Documents cités:
- DE-A1- 4 423 585
- US-A- 4 917 204
- US-A- 5 139 105
- US-A- 5 195 603
- US-A- 5 609 221
- PATENT ABSTRACTS OF JAPAN vol. 004, no. 029 (M-002), 14 mars 1980 (1980-03-14) -& JP 55 004226 A (KAYABA IND CO LTD), 12 janvier 1980 (1980-01-12)

## Description

### DOMAINE DE L'INVENTION

L'objet de l'invention concerne un dispositif de commande de direction d'un véhicule industriel, notamment du type comportant un actionneur hydraulique pour modifier l'angle de braquage des roues du véhicule. La présente invention se rapporte également à un véhicule industriel équipé d'un tel dispositif de commande de direction.

De manière connue en soi, le braquage des roues est opéré, pendant la rotation, par une action sur chaque fusée de roue, exercée directement par l'actionneur ou, plus généralement par une ou plusieurs pièces de transmission. L'actionneur est souvent de type hydraulique, tel qu'un vérin à double effet agissant sur chaque fusée de roue.

### ETAT DE LA TECHNIQUE

Dans le domaine des véhicules industriels, il est souvent nécessaire de prévoir différents modes de fonctionnement du dispositif de commande de direction des roues, en particulier pour permettre au véhicule de suivre des trajectoires exigeantes, par exemple à rayon de courbure très faible ou lors du transport d'une marchandise encombrante. Il existe de nombreuses autres contraintes sur les chantiers ou dans les entreprises qui requièrent des véhicules modulables et très maniables.

C'est pourquoi certains dispositifs de direction de l'art antérieur permettent un fonctionnement du véhicule selon différents modes de couplage entre les roues avant et les roues arrière. On connaît le mode de couplage conventionnel dans lequel deux roues avant sont directrices. Dans certains cas, il est utile de bénéficier quatre roues directrices. Pour améliorer la capacité de braquage, les roues arrière peuvent être orientables concomitamment et en sens opposé aux roues avant. Dans certains cas, les contraintes de chantier peuvent imposer un déplacement dit « en crabe », c'est-à-dire dans lequel les roues arrière sont orientables concomitamment et parallèlement aux roues avant. Il s'agit par exemple de manoeuvres de suivi de talus ou analogue.

Pour réaliser ces différents modes de couplage, de nombreux dispositifs de direction de l'art antérieur présentent un circuit hydraulique assurant l'alimentation des différents actionneurs. Ce circuit peut être configuré par le conducteur du véhicule selon le mode de couplage choisi. Cette configuration est réalisée au moyen d'électrovannes autorisant le passage d'un fluide apte à transmettre la puissance et les commandes aux actionneurs modifiant l'angle de braquage des roues, selon les différents modes de couplage possibles.

Cependant, ces actionneurs à puissance hydraulique sont commandés par des signaux électriques. Donc, lors d'une défaillance électrique de commande des électrovannes, le véhicule peut changer subitement de mode de couplage entraînant ainsi un changement brutal de direction des roues, réduisant alors la maniabilité du véhicule et conduisant à une situation dangereuse pour le conducteur. Ainsi, un véhicule peut passer brusquement d'un mode à deux roues directrices à un mode de couplage « en crabe ». Une telle défaillance électrique peut consister par exemple en une coupure de l'alimentation électrique, du fait de l'usure ou du sectionnement d'un fil, mais aussi tout simplement d'un épuisement de la batterie, d'une défaillance d'alternateur ou de bobine.

Pour éviter ce problème, les documents US-A-4 917 204 et US-A-5 139 105 décrivent des véhicules équipés de dispositifs de direction autorisant sélectivement deux modes de couplage entre les roues avant et les roues arrière et pourvus de moyens de verrouillage mécanique aptes à maintenir le mode de couplage courant malgré une défaillance électrique.

Cependant, les moyens de verrouillage mécanique doivent nécessairement présenter les dimensions appropriées et un jeu fonctionnel pour les déplacements relatifs des pièces. Or, ce jeu peut entraîner un jeu dans l'angle de braquage et induire ainsi un léger battement des roues directrices, lequel rend la conduite moins précise et moins agréable. De plus, ces moyens de verrouillage mécanique sont spécifiques à cette application. Ils représentent donc une solution relativement onéreuse et peu reproductible, ce qui rend les réparations délicates.

### EXPOSE DE L'INVENTION

L'objet de l'invention est donc de proposer un dispositif de commande de direction fiable, en particulier apte à maintenir les ordres adressés aux actionneurs de façon à conserver durablement le mode courant de couplage des roues avant avec les roues arrière.

L'invention concerne donc un dispositif de commande de direction d'un véhicule industriel comprenant de façon connue :
- deux roues avant susceptibles d'être orientées selon un premier angle de braquage au moyen d'au moins un premier actionneur,
- deux roues arrière susceptibles d'être orientées selon un deuxième angle de braquage au moyen d'au moins un deuxième actionneur,
- un circuit de puissance comprenant une source de fluide sous pression et des composants de puissance aptes à transmettre la puissance hydraulique aux actionneurs, les composants de puissance étant susceptibles d'être commandés de manière à configurer le circuit de puissance selon des premier, deuxième et troisième modes de couplage desdites roues avant avec lesdites roues arrière

Selon l'invention, le dispositif de commande de direction comprend un circuit de commande, comprenant une source de fluide sous pression et des composants de commande pilotés électriquement par une unité de commande électrique. Les composants de commande sont aptes à transmettre aux composants de puissance des ordres de commande hydrauliques propres à un des modes de couplage déterminé. Ces composants de commande sont hydrauliquement connectés de manière a comporter deux sous-ensembles parallèles, ainsi qu'un sélecteur de circuit hydraulique réalisant une fonction « ou » et connecté hydrauliquement aux deux sous-ensembles parallèles de manière à pouvoir transmettre un ordre permettant de configurer le circuit de puissance selon l'un des deuxième et troisième modes de couplage des roues avant avec les roues arrière, les composants de commande étant rappelés en cas de survenance d'un défaut au niveau d'un pilotage électrique des composants de commande, les ordres de commande hydrauliques sont maintenus de façon à maintenir durablement la configuration dudit circuit de puissance selon le mode courant de couplage desdites roues avant avec lesdites roues arrière.

Autrement dit, en cas de défaillance électrique, le dispositif de commande de direction objet de l'invention présente des connexions des circuits de commande et de puissance telles que le véhicule peut fonctionner en mode dégradé, dans lequel aucun nouvel ordre n'est transmis par les composants de puissance responsables de la configuration du circuit. Les composants de puissance hydrauliques demeurent donc dans le même état avant et après survenance d'un défaut électrique de pilotage des composants de commande.

En d'autres termes, en cas de perte de commande électrique, la configuration du circuit, et donc le mode de direction (« deux » ou « quatre roues directrices » ou « en crabe ») est conservé par la permanence des ordres hydrauliques que reçoivent les composants de puissance.

En pratique, les composants de commande peuvent piloter hydrauliquement les composants de puissance de manière à configurer le circuit de puissance selon un mode de couplage dans lequel seules les roues avant sont orientables tandis que l'angle de braquage des roues arrière demeure nul, c'est-à-dire fixe et selon l'axe principal du véhicule. Un tel dispositif réalise ainsi le mode de couplage avec les deux roues avant comme seules roues directrices.

De manière avantageuse, les composants de commande peuvent piloter hydrauliquement les composants de puissance de manière à configurer le circuit de puissance selon un mode de couplage dans lequel les roues arrière sont orientables concomitamment et parallèlement aux roues avant. Le mode de couplage ainsi obtenu correspond au déplacement « en crabe » du véhicule, c'est-à-dire au moins partiellement selon une direction latérale.

De préférence, les composants de commande et les composants de puissance peuvent être connectés hydrauliquement de manière à configurer le circuit de puissance selon un mode de couplage dans lequel les roues arrière sont orientables concomitamment et en sens opposé aux roues avant, la direction des roues arrière formant avec l'axe principal du véhicule un angle complémentaire à l'angle formé par les roues avant sur l'axe principal du véhicule. Il s'agit alors du mode de couplage à quatre roues directrices, les roues arrière contribuant à accentuer la courbure de la trajectoire suivie par le véhicule.

En pratique, le dispositif de commande de direction peut comprendre en outre un organe de sélection permettant au conducteur du véhicule de sélectionner l'un des modes de couplage des roues avant avec les roues arrière. Un tel organe de sélection à plusieurs positions permet au conducteur de choisir le mode de couplage, donc de conduite, le mieux adapté à la trajectoire qu'il doit donner au véhicule.

Selon une forme de réalisation pratique de l'invention, l'ensemble des composants de commande du dispositif de commande de direction comprend :
- deux distributeurs de commande monostables normalement fermés à pilotage électrique et présentant deux orifices et deux positions, les distributeurs étant connectés à au moins une source de fluide sous pression,
- deux distributeurs de commande monostables normalement ouverts à pilotage électrique et présentant trois orifices et deux positions, chacun des distributeurs étant reliés à deux des composants de puissance de manière à leur transmettre des ordres hydrauliques, chacun des distributeurs de commande normalement ouverts étant monté en série avec chacun des distributeurs de commande normalement fermés, chaque distributeur de commande normalement ouvert étant connecté à une conduite d'échappement,
- un sélecteur de circuit hydraulique apte à réaliser une fonction « OU » monté en parallèle des deux distributeurs de commande normalement ouverts.

Autrement dit, l'ensemble des composants comporte deux sous-ensembles parallèles et comportant chacun une électrovanne normalement fermée et un distributeur à échappement normalement ouvert, chaque sous-ensemble étant affecté à un côté du véhicule. Ces quatre composants sont susceptibles d'être ramenés en position de repos sous l'action d'un moyen de rappel. Les deux sous-ensembles sont connectés à un sélecteur de circuit hydraulique réalisant une fonction « OU ».

Dans une forme de réalisation pratique, l'ensemble des composants de puissance comprend cinq distributeurs de puissance monostables commandés hydrauliquement par les distributeurs de commande présentant deux orifices et deux positions. En d'autres termes, les électrovannes de commande commandent des vannes hydrauliques de puissance.

En pratique, le dispositif de commande de direction présente les caractéristiques suivantes :
- les premier et deuxième actionneurs comprennent chacun un vérin à double effet possédant deux tiges et présentant deux chambres d'actionnement séparées par un piston et susceptible de recevoir le fluide de transmission de puissance,
- au moins quatre conduites hydrauliques relient deux à deux les chambres d'actionnement, chaque conduite reliant le premier actionneur au deuxième actionneur et chacune des chambres étant connectée à au moins deux des conduites,
- chacune des conduites est équipée d'une vanne constituée par un des distributeurs de puissance monté normalement fermé,
- une conduite hydraulique équipée du cinquième distributeur de puissance monté normalement ouvert est connectée à chacune des quatre conduites hydrauliques, de manière à les isoler en deux groupes de deux conduites.

Avantageusement, pour une position déterminée de l'organe de sélection, les composants de commande ne transmettent aucun ordre hydraulique aux cinq distributeurs de puissance, les distributeurs de puissance se trouvant ainsi en position de repos, fermés, de manière à configurer le circuit de puissance selon le premier mode de couplage. Cette position de l'organe de sélection configure le circuit de puissance selon le mode à deux roues directrices.

De préférence, pour l'une ou l'autre de deux positions déterminées de l'organe de sélection, le cinquième distributeur de puissance et deux des autres distributeurs de puissance reçoivent des ordres hydrauliques transmis par les composants de commande, de manière à permettre de configurer le circuit de puissance sélectivement selon l'un des deuxième ou troisième modes de couplage. Ces deux autres positions de l'organe de sélection configurent le circuit de puissance selon le mode « en crabe » ou à quatre roues directrices.

En outre, le dispositif de commande de direction selon l'invention peut donc équiper de multiples véhicules industriels. Un tel véhicule peut donc être dirigé de manière particulièrement fiable selon au moins trois modes de couplage des roues.

### DESCRIPTION SOMMAIRE DES FIGURES

La manière dont l'invention peut être réalisée et les avantages qui en découlent, ressortiront mieux de l'exemple de réalisation qui suit, donné à titre indicatif et non limitatif à l'appui des figures annexées.

La figure 1 représente de façon schématique un dispositif de commande de direction conforme à la présente invention et commandé selon un premier mode de couplage, avec deux roues directrices.

La figure 2 représente de façon schématique le dispositif de commande de direction de la figure 1, commandé selon un deuxième mode de couplage, avec quatre roues directrices couplées en parallèle ou « en crabe ».

La figure 3 représente de façon schématique le dispositif de commande de direction de la figure 1, commandé selon un troisième mode de couplage, avec quatre roues directrices couplées en sens opposé.

### MODE DE REALISATION DETAILLE DE L'INVENTION

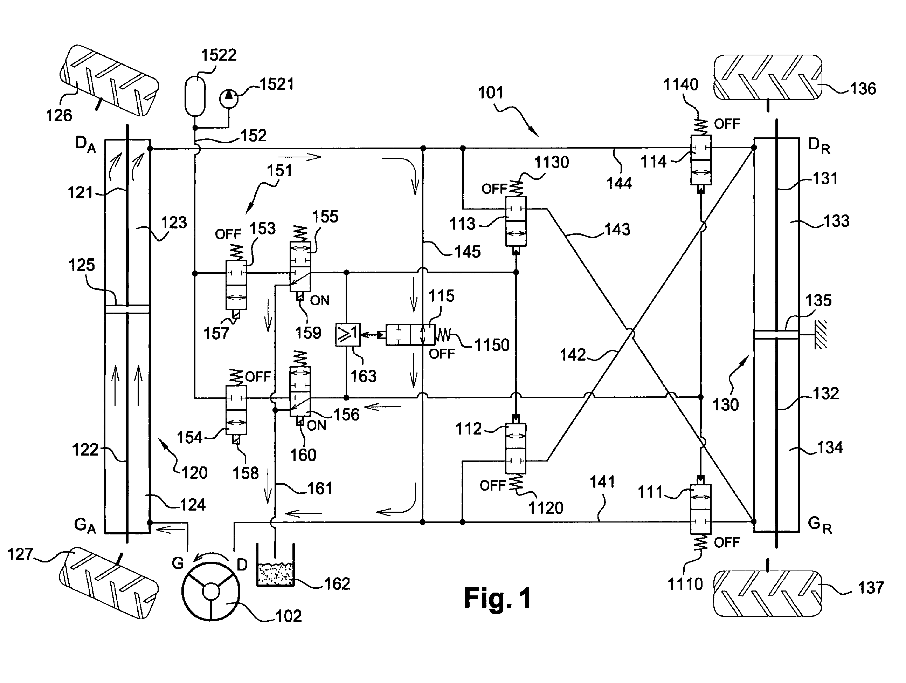

La figure 1 montre un dispositif de commande de direction d'un véhicule industriel comprenant un premier actionneur 120 apte à orienter les deux roues avant 126, 127 quasiment parallèlement l'une à l'autre, c'est-à-dire pratiquement selon le même angle, à l'approximation près des rayons de courbure des trajectoires des deux roues qui diffèrent très légèrement. Le dispositif comporte également un deuxième actionneur 130 apte à orienter les deux roues arrière 136, 137 parallèlement l'une à l'autre, et un circuit de puissance 101 alimenté par une source de fluide sous pression connue en soi (non représentée). Dans la forme illustrée, chacun des deux actionneurs 120, 130 se compose d'un vérin à double effet possédant deux tiges 121, 122 ; 131, 132 et présentant deux chambres d'actionnement 123, 124 ; 133, 134 séparées par un piston 125 ; 135 et susceptibles de recevoir le fluide de transmission de puissance. Par ailleurs, il est aussi possible de prévoir un vérin à double effet par roue, ou encore un vérin pilotant une seule roue et un dispositif de tringlerie transmettant le mouvement de la tige du vérin à la deuxième roue du train.

Dans le circuit de puissance 101, le fluide est mis en mouvement au moyen d'une action sur un volant 102 dans le but de tourner à droite ou à gauche. Le fluide de puissance peut circuler à travers quatre conduites hydrauliques d'actionnement 141, 142, 143, 144, lesquelles relient deux à deux les chambres d'actionnement 123, 124 ; 133, 134. De plus, chaque conduite 141, 142, 143, 144 relie le premier vérin 120 au deuxième vérin 130 et chacune des chambres est connectée à deux des conduites 141, 142, 143, 144. En outre, une conduite hydraulique d'isolement 145 est connectée à chacune des quatre conduites hydrauliques 141, 142, 143, 144, de manière à permettre l'isolement en deux groupes de deux conduites 141, 142 et 143, 144.

Le circuit de puissance 101 comporte en outre cinq composants de puissance pour contrôler la circulation du fluide de puissance dans les conduites 141, 142, 143, 144. Ces composants sont constitués de distributeurs de puissance à deux orifices et deux positions, autrement dit des vannes hydrauliques monostables, et sont dimensionnés de façon connue en soi de manière à pouvoir transmettre la puissance hydraulique aux actionneurs 120, 130. Quatre des vannes de puissance constituant les composants de puissance sont prévues normalement fermées 111, 112, 113, 114 et agissent telles des vannes d'actionnement tandis qu'une cinquième vanne est prévue normalement ouverte 115 qui agit comme une vanne d'isolement entre deux groupes de deux conduites d'actionnement 141, 142 ; 143, 144. Comme indiqué plus haut, les cinq vannes de puissance 111, 112, 113, 114, 115 sont monostables, du fait du rappel en position de repos de chacune par un moyen de rappel 1110, 1120, 1130, 1140, 1150.

Ainsi, la circulation du fluide de puissance dans chacune des cinq conduites de puissance 141, 142, 143, 144, et, partant, le mode de couplage entre les roues avant et arrière, est fonction des états d'ouverture ou de fermeture des cinq vannes de puissance 111, 112, 113, 114, 115, donc de la façon dont ces cinq vannes sont commandées.

Comme l'illustre la figure 1 et conformément à l'invention, les organes de commandes des cinq vannes de puissance 111, 112, 113, 114, 115 sont connectés hydrauliquement à des composants de commande, lesquels sont reliés entre eux de manière à former un circuit de commande 151. Les composants du circuit de commande 151 sont constitués de distributeurs hydrauliques susceptibles d'être commandés de manière à configurer ledit circuit de puissance 101 selon différents modes de couplage. Ces composants de commande sont pilotés électriquement par une unité de commande électrique appropriée (non représentée) et sont connectés à une source de fluide sous pression 152 comportant avantageusement une pompe 1521 et un accumulateur 1522 hydrauliques. Ils sont par ailleurs constitués de :
- deux distributeurs de commande monostables normalement fermés 153, 154 à pilotages électriques 157, 158 et présentant deux orifices et deux positions, couramment dénommées électrovannes,
- deux distributeurs de commande monostables normalement ouverts 155, 156 à pilotages électriques 159, 160 et présentant trois orifices et deux positions, c'est-à-dire des électrovannes avec une conduite d'échappement 161, laquelle relie le circuit de commande à un réservoir à pression inférieure à la pression des ordres hydrauliques,
- un sélecteur de circuit hydraulique 163 apte à réaliser une fonction « OU » monté en parallèle des deux distributeurs de commande normalement ouverts 155, 156.

Le circuit de commande 151 est agencé de façon à ce que chacun des distributeurs 153, 154 ; 155, 156 est relié à deux des cinq vannes de puissance 111, 112, 113, 114, 115 de manière à leur transmettre des ordres hydrauliques, contrôlant ainsi l'état d'ouverture des vannes de puissance 111, 112, 113, 114, 115.

Chacun des distributeurs normalement ouverts 155, 156 est monté en série avec une électrovanne normalement fermée 153, 154, et se trouve de plus connecté à une conduite d'échappement commune 161 menant à un réservoir 162 à pression inférieure à la pression des ordres hydrauliques, par exemple à la pression atmosphérique. La pression de la conduite d'échappement 161 fournit ainsi une référence pour l'état bas de la commande. Les composants de commande 153, 154, 155, 156, 163 ainsi connectés sont aptes à transmettre aux composants de puissance par l'intermédiaire de l'huile de commande 111, 112, 113, 114, 115 des ordres de commande hydrauliques propres à chaque mode de couplage.

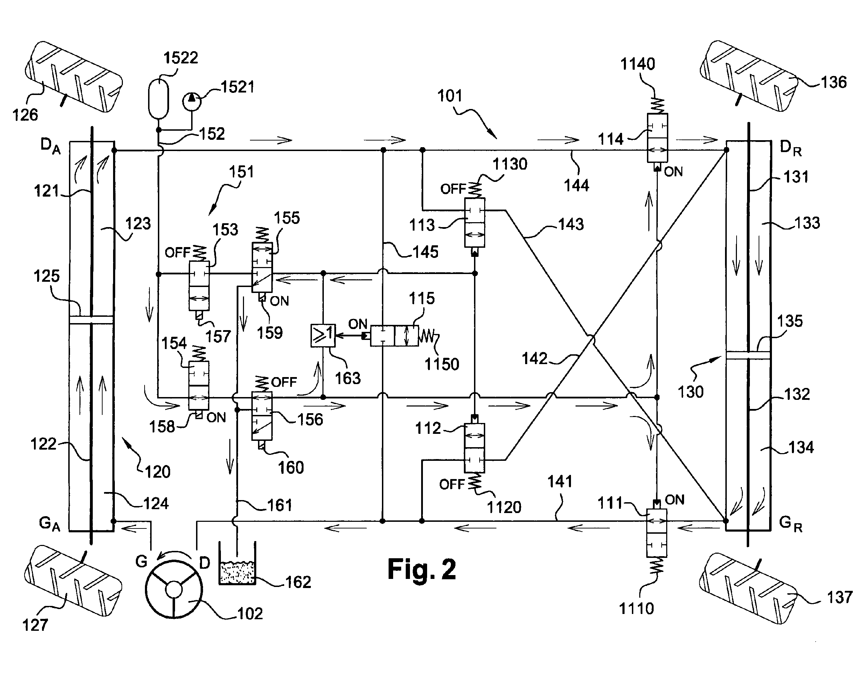

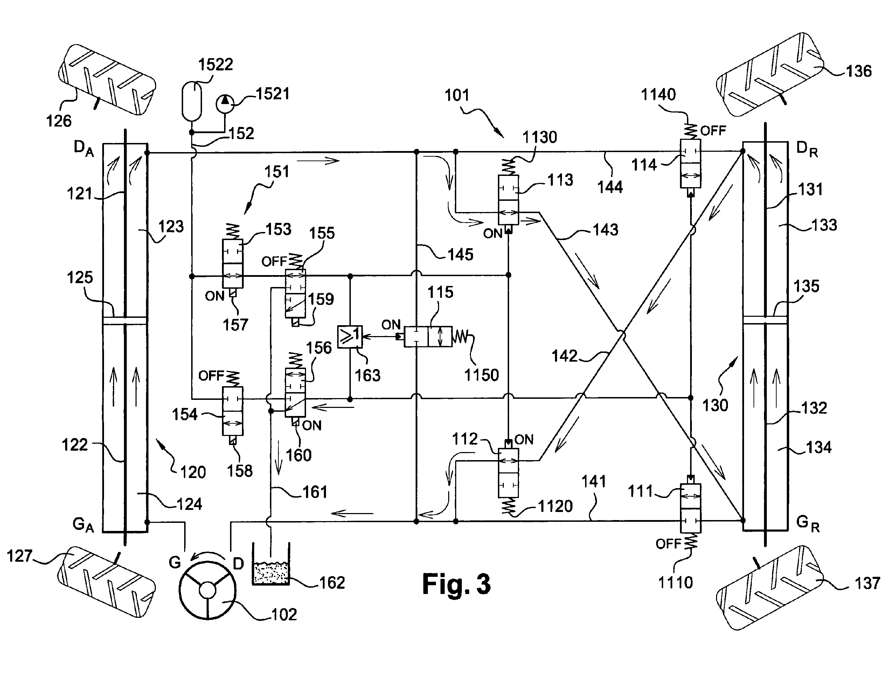

Ainsi, le dispositif de commande de direction exposé en liaison avec les figures peut être configuré selon trois modes différents de couplage des roues avant et arrière : la figure 1 illustre le mode à deux roues avant directrices, la figure 2 le mode « en crabe », où les roues avant et arrière sont orientées concomitamment et parallèlement, et la figure 3 le mode à quatre roues directrices, où les roues avant et arrière sont orientées concomitamment et en sens opposés. Sur chacune de ces figures, la montée en pression des conduites de puissance et de commande et des vérins 120, 130 est schématisée par des flèches parallèles aux conduites concernées. De plus, sur chaque figure, les distributeurs de puissance et de commande sont représentés dans leur position effective en fonction du mode de couplage illustré ; en outre, les états « ON » ou « OFF » sont inscrits au niveau de leurs organes de commande pour indiquer l'état des commandes hydraulique et des pilotages électriques des composants.

De plus, conformément à une caractéristique de l'invention, les composants employés combinés avec les connexions réalisées tels qu'exposés ci-dessus, permettent, en cas de survenance d'un défaut au niveau d'un pilotage électrique des composants de commande 155, 156, de maintenir les ordres de commande de façon à conserver durablement la configuration du circuit de puissance 101 selon le mode courant de couplage des roues avant avec les roues arrière. Un tel dispositif de commande de direction évite ainsi un changement brusque du mode de couplage des roues, donc de conduite.

En effet, si le pilotage électrique disparaît, les composants de commande 153, 154, 155, 156, 163, qui sont monostables, se retrouvent tous en position de repos. Ainsi, les électrovannes 153, 154 sont fermées tandis que chacun des distributeurs 155, 156 est placé en position déconnectée de la conduite d'échappement 161. On comprend aisément, notamment au vu des figures, que les pressions, haute ou basse, qui règnent dans les conduites de commande sont alors maintenues et, par conséquent, les ordres hydrauliques transmis aux vannes de puissances 113, 112, 115 aussi.

La figure 1 illustre le premier mode de couplage. Pour réaliser ce mode de couplage, seuls les deux distributeurs de commande normalement ouverts 155, 156 sont pilotés électriquement par un signal émis sur leurs électroaimants 159, 160. Les électrovannes 153, 154 demeurent fermées tandis que les deux distributeurs 155, 156 se placent alors en position d'échappement à basse pression vers le réservoir 162, aucun ordre d'ouverture n'étant alors envoyé aux quatre vannes de puissance d'actionnement 111, 112, 113, 114, dont les conduites 141, 142, 143, 144 demeurent non passantes. De même, la vanne d'isolement 115 n'est pas pilotée et reste en position ouverte maintenant la conduite 145 passante.

Ainsi, lorsque le conducteur tourne le volant 102 vers la gauche, la pression monte dans la chambre 124 du vérin 120, puis se transmet par l'intermédiaire du piston 125 dans la chambre 123, puis dans la seule conduite passante 145, avant de boucler vers la source de mise en pression (non représentée). Il ressort donc de la configuration de la figure 1 que seules les roues avant sont orientables et directrices, les roues arrière demeurant droites, c'est-à-dire selon l'axe principal du véhicule défini par la marche tout droit et en avant.

La figure 3 illustre le troisième mode de couplage. Pour réaliser ce mode de couplage, un distributeur de commande normalement ouvert 156 et une électrovanne 153 sont pilotés électriquement par un signal émis sur leurs électroaimants 160, 157. L'autre électrovanne 154 demeure fermée tandis que l'autre distributeur 155 se place alors en position d'échappement à basse pression vers le réservoir 162, aucun ordre d'ouverture n'étant alors envoyé aux deux vannes de puissance d'actionnement 111, 114, dont les conduites 141, 144 demeurent non passantes. De plus, la vanne d'isolement 115, pilotée par le distributeur 155, se place en position fermée bloquant alors la conduite 145.

Ainsi, lorsque le conducteur tourne vers la gauche le volant 102, ou plus généralement un organe de direction, la pression monte dans la chambre 124 du vérin 120, puis se transmet à la chambre 123 par l'intermédiaire du piston 125, puis, via la conduite passante 143, à la chambre 134 du deuxième vérin 130. La pression se transmet alors à la chambre 133 par l'intermédiaire du piston 135, puis, via la conduite passante 142, boucle ensuite vers la source de mise en pression (non représentée). Il ressort donc de la configuration de la figure 3 que les quatre roues sont directrices et orientables en sens opposés. En général, la direction des roues arrière forme avec l'axe principal du véhicule un angle complémentaire à l'angle formé par les roues avant sur l'axe principal du véhicule

La figure 2 illustre le deuxième mode de couplage. Pour réaliser ce mode de couplage, un distributeur de commande normalement ouvert 155 et une électrovanne 154 sont pilotés électriquement par un signal émis sur leurs électroaimants 159, 158. L'autre électrovanne 153 demeure fermée tandis que l'autre distributeur 156 se place alors en position d'échappement à basse pression vers le réservoir 162, aucun ordre d'ouverture n'étant alors envoyé aux deux vannes de puissance d'actionnement 112, 113, dont les conduites 142, 143 demeurent non passantes. De plus, la vanne d'isolement 115, pilotée par le distributeur 155, se place en position fermée bloquant alors la conduite 145.

Ainsi, lorsque le conducteur tourne le volant 102 vers la gauche, la pression monte dans la chambre 124 du vérin 120, puis se transmet à la chambre 123 par l'intermédiaire du piston 125, puis, via la conduite passante 144, à la chambre 133 du deuxième vérin 130. La pression se transmet alors à la chambre 134 par l'intermédiaire du piston 135, puis, via la conduite passante 141, boucle ensuite vers la source de mise en pression (non représentée). Il ressort donc de la configuration de la figure 2 que les quatre roues sont orientables concomitamment et parallèlement, permettant un déplacement « en crabe » du véhicule.

En cas de défaillance électrique survenant au niveau de l'unité de commande électrique (non représentée) du circuit de commande 151, le dispositif de commande de direction conforme à l'invention, compte tenu de ses composants et de leurs connexions, maintient les ordres hydrauliques sur les composants de puissance actionnés, évitant donc un brusque changement de mode de couplage des roues entre elles.

Ainsi, la pression haute exercée sur les vannes de puissance 111, 114 demeure constante, à l'approximation près des éventuelles légères fuites dues aux jeux mécaniques, car alors le circuit de commande est « figé ». En effet, aucune électrovanne de commande 153, 154 ni aucun distributeur de commande 155, 156 n'est relié à l'échappement 162 ni à la source de pression 152, si bien que les conduites du circuit de commande 151 sont isolées.

En effet, si l'on se place dans l'un quelconque des trois modes de couplage décrits ci-dessus, on constate que la disparition de pilotage électrique entraîne les composants de commande 153, 154, 155, 156, 163, qui sont monostables, en position de repos. Ainsi, les électrovannes 153, 154 sont fermées tandis que chacun des distributeurs 155, 156 est placé en position déconnectée de la conduite d'échappement 161. Les pressions, haute ou basse, qui règnent dans les conduites de commande sont alors maintenues et, par conséquent, les ordres hydrauliques transmis aux vannes de puissances 113, 112, 115 aussi.

Ainsi, le mode de couplage courant, c'est-à-dire celui qui était sélectionné avant l'apparition de la défaillance électrique, est maintenu et le conducteur peut continuer à conduire en toute sécurité. Le défaut électrique peut consister en une coupure d'alimentation, à une surtension ou à tout autre type de défaut, comme indiqué ci-dessus. On peut par ailleurs prévoir que le défaut de pilotage électrique soit signalé au conducteur afin que ce dernier puisse prendre les mesures de réparation nécessaires pour corriger ce défaut.

En tant que source de pression, l'accumulateur 1522 peut remplacer la pompe 1521 lorsqu'elle tombe en panne ou lorsqu'elle cesse d'être alimentée. Ainsi, lorsque la pompe 1521 n'est plus apte à mettre le circuit de commande 151 en pression, l'accumulateur 1522 peut être connecté, automatiquement ou manuellement, à ce circuit pour relayer la pompe et maintenir provisoirement le fonctionnement normal du circuit de commande 151, donc du dispositif de commande de direction complet. L'organe de vanne situé entre l'accumulateur 1522 et la pompe 1521 n'est pas illustré sur les figures, car son choix et son insertion ne présentent aucune difficulté pour un homme de l'art.

Bien évidemment, cet accumulateur 1522 ne peut remplacer la pompe 1521 que pendant une durée déterminée à l'issue de laquelle sa pression interne n'est plus suffisante pour assurer le fonctionnement normal du circuit de commande 151. A cet instant, il devient indispensable de remplacer la pompe 1521. Toutefois, dans ce dernier cas, comme cela a été exposé ci-dessus, le conducteur peut continuer à utiliser le véhicule dans le mode de couplage courant, du fait de la construction de son dispositif de commande conformément à la présente invention.

Pour simplifier la lecture des figures, seuls les composants indispensables à la compréhension de l'invention ont été représentés. C'est pourquoi certains composants nécessaires au fonctionnement du dispositif ont été volontairement omis. L'homme du métier n'aura cependant aucune difficulté quant à leur choix et à leur position dans les circuits, dans le mesure où ce sont des composants et des fonctions très communs. Pour des raisons similaires, les dimensionnements des composants des circuits de commande et de puissance, inutiles à la compréhension de l'invention et tout à fait à la portée de l'homme du métier, ne sont pas détaillés dans cet exposé.

Bien entendu, d'autres composants hydrauliques et/ou électriques conventionnels peuvent être ajoutés au circuit selon les besoins. Par exemple, on peut ajouter des filtres, des régulateurs de débit, des capteurs de pression ou d'état, des vannes de purge... De même, on peut remplacer les composants de commande et/ou de puissance représentés sur les figures par des composants remplissant les mêmes fonctions et, éventuellement, des fonctions supplémentaires. Ces modifications et/ou ajouts élémentaires sont possibles, sans pour autant sortir du cadre de l'invention.

## Revendications

1. Dispositif de commande de direction d'un véhicule industriel comprenant :
- deux roues avant (126, 127) susceptibles d'être orientées selon un premier angle de braquage au moyen d'au moins un premier actionneur (120),
- deux roues arrière (136, 137) susceptibles d'être orientées selon un deuxième angle de braquage au moyen d'au moins un deuxième actionneur (130),
- un circuit de puissance (101) comprenant une source de fluide sous pression et des composants de puissance (111, 112, 113, 114, 115) aptes à transmettre la puissance hydraulique auxdits actionneurs, lesdits composants de puissance (111, 112, 113, 114, 115) étant susceptibles d'être commandés de manière à configurer ledit circuit de puissance (101) selon des premier, deuxième et troisième modes de couplage desdites roues avant (126, 127) avec lesdites roues arrière (136, 137),
***caractérisé en ce* qu'**il comprend un circuit de commande (151), comprenant une source de fluide sous pression et des composants de commande (153, 154, 155, 156, 163) pilotés électriquement par une unité de commande électrique, lesdits composants de commande (153, 154, 155, 156, 163) étant aptes à transmettre auxdits composants de puissance (111, 112, 113, 114, 115) des ordres de commande hydrauliques propres à un desdits premier, deuxième et troisième modes de couplage déterminé, ***et en ce que*** lesdits composants de commande sont hydrauliquement connectés de manière à comporter deux sous-ensembles parallèles (153,155 et 154, 156), ainsi qu'un sélecteur de circuit hydraulique (163) réalisant une fonction « ou » et connecté hydrauliquement aux deux sous-ensembles parallèles (153,155 et 154, 156) de manière à pouvoir transmettre un ordre permettant de configurer le circuit de puissance (101) selon l'un des deuxième et troisième modes de couplage des roues avant avec les roues arrière, les composants de commande (153, 154, 155, 156, 163) étant rappelés en cas de survenance d'un défaut au niveau d'un pilotage électrique desdits composants de commande (153, 154, 155, 156, 163), vers une position de repos dans laquelle lesdits ordres de commande sont maintenus de façon à maintenir durablement la configuration dudit circuit de puissance (101) selon le mode courant de couplage desdites roues avant (126, 127) avec lesdites roues arrière (136, 137).

2. Dispositif selon la revendication 1, ***caractérisé en ce que*** dans le premier mode de couplage, seules les roues avant (126,127) sont orientables tandis que l'angle de braquage des roues arrière (136, 137) demeure nul selon l'axe principal dudit véhicule.

3. Dispositif selon la revendication 1, ***caractérisé en ce que*** dans le deuxième mode de couplage, les roues arrière (136, 137) sont orientables concomitamment et dans le même sens que les roues avant (126, 127).

4. Dispositif selon la revendication 1, **caractérisé en ce que** dans le troisième mode de couplage, les roues arrière (136, 137) sont orientables concomitamment et en sens opposé aux roues avant (126, 127).

5. Dispositif selon l'une des revendications précédentes, ***caractérisé en ce* qu'**il comprend en outre un organe de sélection permettant au conducteur dudit véhicule de sélectionner l'un desdits modes de couplage des roues avant (126, 127) avec les roues arrière (136, 137).

6. Dispositif selon l'une des revendications précédentes, ***caractérisé en ce que*** l'ensemble desdits composants de commande (153, 154, 155, 156, 163) comprend :
- deux distributeurs de commande monostables normalement fermés (153, 154) à pilotages électriques (157, 158) et présentant deux orifices et deux positions, lesdits distributeurs (153, 154) étant connectés à au moins une source de fluide sous pression,
- deux distributeurs de commande monostables normalement ouverts (155, 156) à pilotages électriques (159, 160) et présentant trois orifices et deux positions, chacun desdits distributeurs (155, 156) étant reliés à deux desdits composants de puissance (111, 112, 113, 114) de manière à leur transmettre des ordres hydrauliques, chacun desdits distributeurs de commande normalement ouverts (155, 156) et l'un desdits distributeurs de commande normalement fermés (153, 154) étant montés en série l'un avec l'autre au sein d'un desdits sous-ensembles parallèles (153,155 et 154, 156), chaque distributeur de commande normalement ouvert (155, 156) étant connecté à une conduite d'échappement, le sélecteur de circuit hydraulique (163) apte à réaliser une fonction « OU » étant monté en parallèle des deux distributeurs de commande normalement ouverts (155, 156).

7. Dispositif selon l'une des revendications précédentes, ***caractérisé en ce que*** l'ensemble desdits composants de puissance comprend cinq distributeurs de puissance monostables (111, 112, 113, 114, 115) commandés hydrauliquement par lesdits distributeurs de commande normalement ouverts (155, 156).

8. Dispositif selon la revendication 6, ***caractérisé en ce que** :*
- lesdits premier et deuxième actionneurs (120, 130) comprennent chacun un vérin à double effet possédant deux tiges (121, 122 ; 131, 132) et présentant chacun deux chambres d'actionnement (123, 124 ; 133, 134) séparées par un piston (125 ; 135) et susceptibles de recevoir le fluide de transmission de puissance,
- au moins quatre conduites hydrauliques (141, 142, 143, 144) relient deux à deux lesdites chambres d'actionnement (123, 124; 133, 134), chaque conduite reliant ledit premier actionneur (120) audit deuxième actionneur (130) et chacune desdites chambres (123, 124 ; 133, 134) étant connectée à au moins deux desdites conduites (141, 144, 142, 143),
- chacune desdites conduites (141, 144, 142, 143) est équipée d'une vanne constituée par un desdits distributeurs de puissance (111, 112, 113, 114) monté normalement fermé,
- une conduite hydraulique (145) équipée du cinquième distributeur de puissance (115) monté normalement ouvert est connectée à chacune desdites quatre conduites hydrauliques (141, 142, 143, 144), de manière à les isoler en deux groupes de deux conduites (141, 142 ; 143, 144).

9. Dispositif selon la revendication 8, ***caractérisé en ce que*** pour une position déterminée dudit organe de sélection, lesdits composants de commande (153, 154, 155, 156, 163) ne transmettent aucun ordre hydraulique auxdits cinq distributeurs de puissance (111, 112, 113, 114, 115), lesdits distributeurs de puissance (111, 112, 113, 114, 115) se trouvant ainsi en position de repos, fermés, de manière à configurer ledit circuit de puissance (101) selon ledit premier mode de couplage.

10. Dispositif selon la revendication 8, ***caractérisé en ce que*** pour l'une ou l'autre de deux positions déterminées dudit organe de sélection, ledit cinquième distributeur de puissance (115) et deux desdits autres distributeurs de puissance (111, 112, 113, 114) reçoivent des ordres hydrauliques transmis par lesdits composants de commande (153, 154, 155, 156, 163), de manière à permettre de configurer ledit circuit de puissance sélectivement selon l'un desdits deuxième ou troisième mode de couplage.

11. Véhicule industriel équipé d'un dispositif de commande de direction selon l'une quelconque des revendications précédentes.

## Claims

1. A steering control device for a commercial vehicle comprising:
- two front wheels (126, 127) capable of being oriented according to a first turning angle by means of at least one first actuator (120),
- two rear wheels (136, 137) capable of being oriented according to a second turning angle by means of at least one second actuator (130),
- a power circuit (101) comprising a pressurized fluid source and power components (111, 112, 113, 114, 115) able to transmit the hydraulic power to the said actuators, the said power components (111, 112, 113, 114, 115) being capable of being controlled so as to configure the said power circuit (101) according to first, second and third modes of coupling of the said front wheels (126, 127) with the said rear wheels (136, 137),
***characterized in that*** it comprises a control circuit (151), comprising a pressurized fluid source and control components (153, 154, 155, 156, 163) driven electrically by an electrical control unit, the said control components (153, 154, 155, 156, 163) being able to transmit hydraulic control commands to the said power components (111, 112, 113, 114, 115), the said commands being specific to one of the said first, second and third modes of coupling determined, ***and in that*** the said control components are hydraulically connected in such a way as to comprise two parallel sub-assemblies (153,155 and 154,156), as well as a hydraulic circuit selector (163) carrying out an "or" function and connected hydraulically to the two parallel sub-assemblies (153,155 and 154,156) so as to be able to transmit a command making it possible to configure the power circuit (101) according to one of the second and third modes of coupling of the front wheels with the rear wheels, the control components (153, 154, 155, 156, 163) being restored should a fault arise at the level of an electrical drive of the said control components (153, 154, 155, 156, 163), to a rest position in which the said control commands are maintained so as to enduringly maintain the configuration of the said power circuit (101) according to the current mode of coupling of the said front wheels (126, 127) with the said rear wheels (136, 137).

2. The device as claimed in claim 1, ***characterized in that*** said control components (153, 154, 155, 156, 163) hydraulically drive said power components (111, 112, 113, 114, 115) so as to configure said power circuit (101) according to a first mode of coupling in which only the front wheels (126, 127) are orientable while the turning angle of the rear wheels (136, 137) remains zero along the principal axis of said vehicle.

3. The device as claimed in claim 1, ***characterized in that*** in the second mode of coupling, the rear wheels (136, 137) are orientable concomitantly and in the same sense as the front wheels (126, 127).

4. The device as claimed in claim 1, ***characterized in that*** in the third mode of coupling, the rear wheels (136, 137) are orientable concomitantly and in the opposite sense to the front wheels (126, 127).

5. The device as claimed in one of the preceding claims, ***characterized in that*** it furthermore comprises a selection member allowing the driver of said vehicle to select one of said modes of coupling of the front wheels (126, 127) with the rear wheels (136, 137).

6. The device as claimed in one of the preceding claims, ***characterized in that*** the assembly of said control components (153, 154, 155, 156, 163) comprises:
- two normally closed monostable control distributors (153, 154) with electrical drives (157, 158) and exhibiting two orifices and two positions, said distributors (153, 154) being connected to at least one pressurized fluid source,
- two normally open monostable control distributors (155, 156) with electrical drives (159, 160) and exhibiting three orifices and two positions, each of said distributors (155, 156) being linked to two of said power components (111, 112, 113, 114) so as to transmit hydraulic commands to them, each of the said normally open control distributors (155, 156) and one of the said normally closed control distributors (153,154) being mounted in series with one another within one of the said parallel sub-assemblies (153,155 and 154,156), each normally open control distributor (155, 156) being connected to an exhaust duct,
- the hydraulic circuit selector (163) able to carry out an "OR" function being mounted in parallel with the two normally open control distributors (155, 156).

7. The device as claimed in one of the preceding claims, ***characterized in that*** the assembly of said power components comprises five monostable power distributors (111, 112, 113, 114, 115) controlled hydraulically by said normally open control distributors (155, 156).

8. The device as claimed in claim 6, ***characterized in that****:*
- said first and second actuators (120, 130) each comprise a double-action ram possessing two rods (121, 122; 131, 132) and each exhibiting two actuation chambers (123, 124; 133, 134) separated by a piston (125; 135) and capable of receiving the power transmission fluid,
- at least four hydraulic ducts (141, 142, 143, 144) link said actuation chambers (123, 124; 133, 134) pairwise, each duct linking said first actuator (120) to said second actuator (130) and each of said chambers (123, 124; 133, 134) being connected to at least two of said ducts (141, 144, 142, 143),
- each of said ducts (141, 144, 142, 143) is equipped with a valve consisting of one of said normally closed mounted power distributors (111, 112, 113, 114),
- a hydraulic duct (145) equipped with the fifth normally open mounted power distributor (115) is connected to each of said four hydraulic ducts (141, 142, 143, 144), so as to isolate them into two groups of two ducts (141, 142; 143, 144).

9. The device as claimed in claim 8, ***characterized in that*** for a determined position of said selection member, said control components (153, 154, 155, 156, 163) do not transmit any hydraulic command to said five power distributors (111, 112, 113, 114, 115), said power distributors (111, 112, 113, 114, 115) thus being in the rest position, closed, so as to configure said power circuit (101) according to said first mode of coupling.

10. The device as claimed in claim 8, ***characterized in that*** for one or the other of two determined positions of said selection member, said fifth power distributor (115) and two of said other power distributors (111, 112, 113, 114) receive hydraulic commands transmitted by said control components (153, 154, 155, 156, 163), so as to make it possible to configure said power circuit selectively according to one of said second or third mode of coupling.

11. A commercial vehicle equipped with a steering control device according to any one of the preceding claims.

## Patentansprüche

1. Vorrichtung zur Steuerung der Lenkung eines Nutzfahrzeugs mit
- zwei Vorderrädern (126, 127), die mittels wenigstens eines ersten Stellglieds (120) gemäß einem ersten Einschlagwinkel ausrichtbar sind,
- zwei Hinterrädern (136, 137), die mittels wenigstens eines zweiten Stellglieds (130) gemäß einem zweiten Einschlagwinkel ausrichtbar sind,
- einem Leistungskreis (101), der eine Quelle für mit Druck beaufschlagtes Fluid und Leistungskomponenten (111, 112, 113, 114, 115) umfasst, die geeignet sind, die hydraulische Kraft auf die Stellglieder zu übertragen, wobei die Leistungskomponenten (111, 112, 113, 114, 115) so steuerbar sind, dass der Leistungskreis (101) gemäß einem ersten, zweiten und dritten Kupplungsmodus der Vorderräder (126, 127) mit den Hinterrädern (136, 137) konfiguriert wird,
***dadurch gekennzeichnet, dass*** sie einen Steuerkreis (151) aufweist, der eine Quelle für mit Druck beaufschlagtes Fluid und Steuerungskomponenten (153, 154, 155, 156, 163) aufweist, die von einer elektrischen Steuereinheit elektrisch gesteuert werden,
wobei die Steuerungskomponenten (153, 154, 155, 156, 163) in der Lage sind, den Leistungskomponenten (111, 112, 113, 114, 115) hydraulische Steuerungsbefehle zu übermitteln, die einem bestimmten von dem ersten, zweiten und dritten Kupplungsmodus entsprechen, und *dass* die Steuerungskomponenten derart hydraulisch geschaltet sind, dass sie zwei parallele Untereinheiten (153, 155 und 154, 156) sowie einen Wahlschalter für den hydraulischen Kreis (163) umfassen, der eine "oder"-Funktion ausführt und hydraulisch mit den beiden parallelen Untereinheiten (153, 155 und 154, 156) verbunden ist, so dass er einen Befehl übermitteln kann, der ein Konfigurieren des Leistungskreises (101) gemäß einem von dem zweiten und dem dritten Kupplungsmodus der Vorderräder mit den Hinterrädern erlaubt, wobei die Steuerungskomponenten (153, 154, 155, 156, 163) im Falle des Auftretens eines Fehlers im Bereich einer elektrischen Steuerung der Steuerungskomponenten (153, 154, 155, 156, 163) in eine Ruheposition zurückgestellt werden, in der die Steuerungsbefehle derart aufrecht erhalten werden, dass die Konfiguration des Leistungskreises (101) im laufenden Kupplungsmodus der Vorderräder (126, 127) mit den Hinterrädern (136, 137) dauerhaft aufrecht erhalten wird.

2. Vorrichtung nach Anspruch 1, ***dadurch gekennzeichnet, dass*** beim ersten Kupplungsmodus nur die Vorderräder (126, 127) ausrichtbar sind, während der Einschlagwinkel der Hinterräder (136, 137) gemäß der Hauptachse des Fahrzeugs null bleibt.

3. Vorrichtung nach Anspruch 1, ***dadurch gekennzeichnet, dass*** beim zweiten Kupplungsmodus die Hinterräder (136, 137) gleichzeitig mit und in die gleiche Richtung wie die Vorderräder (126, 127) ausrichtbar sind.

4. Vorrichtung nach Anspruch 1, ***dadurch gekennzeichnet, dass*** beim dritten Kupplungsmodus die Hinterräder (136, 137) gleichzeitig mit und in die entgegengesetzte Richtung wie die Vorderräder (126, 127) ausrichtbar sind.

5. Vorrichtung nach einem der vorhergehenden Ansprüche, ***dadurch gekennzeichnet, dass*** sie außerdem eine Auswahleinrichtung umfasst, die es dem Fahrer des Fahrzeugs erlaubt, einen der Modi für die Kupplung der Vorderräder (126, 127) mit den Hinterrädern (136, 137) auszuwählen.

6. Vorrichtung nach einem der vorhergehenden Ansprüche, ***dadurch gekennzeichnet, dass*** die Einheit der Steuerungskomponenten (153, 154, 155, 156, 163)
- zwei normalerweise geschlossene monostabile Steuerungsverteiler (153, 154) mit elektrischen Steuerungen (157, 158), die zwei Öffnungen und zwei Positionen aufweisen, wobei die Verteiler (153, 154) mit wenigstens einer Quelle für mit Druck beaufschlagtes Fluid verbunden sind, und
- zwei normalerweise geöffnete monostabile Steuerungsverteiler (155, 156) mit elektrischen Steuerungen (159, 160) umfasst, die drei Öffnungen und zwei Positionen aufweisen, wobei jeder der Verteiler (155, 156) mit zwei der Leistungskomponenten (111, 112, 113, 114) derart verbunden ist, dass er ihnen hydraulische Befehle übermittelt, wobei jeder der normalerweise geöffneten Steuerungsverteiler (155, 156) und einer der normalerweise geschlossenen Steuerungsverteiler (153, 154) innerhalb einer der parallelen Untereinheiten (153, 155 und 154, 156) miteinander in Serie angeordnet sind, wobei jeder normalerweise geöffnete Steuerungsverteiler (155, 156) mit einer Auslassleitung verbunden ist,
wobei der Auswahlschalter für den Hydraulikkreis (163), der in der Lage ist, eine "ODER"-Funktion auszuführen, zu den beiden normalerweise geöffneten Steuerungsverteilern (155, 156) parallel angeordnet ist.

7. Vorrichtung nach einem der vorhergehenden Ansprüche, ***dadurch gekennzeichnet, dass*** die Einheit der Leistungskomponenten fünf monostabile Leistungsverteiler (111, 112, 113, 114, 115) umfasst, die durch die normalerweise geöffneten Steuerungsverteiler (155, 156) hydraulisch gesteuert werden.

8. Vorrichtung nach Anspruch 6, ***dadurch gekennzeichnet, dass***
- das erste und das zweite Stellglied (120, 130) je einen doppeltwirkenden Zylinder umfassen, der zwei Stangen (121, 122; 131, 132) besitzt und jeweils zwei Betätigungskammern (123, 124; 133, 134) aufweist, die durch einen Kolben (125; 135) getrennt sind und in der Lage sind, das Leistungsübertragungsfluid aufzunehmen,
- wenigstens vier Hydraulikleitungen (141, 142, 143, 144) die Betätigungskammern (123, 124; 133, 134) paarweise verbinden, wobei jede Leitung das erste Stellglied (120) mit dem zweiten Stellglied (130) verbindet und jede der Kammern (123, 124; 133, 134) mit wenigstens zwei der Leitungen (141, 144, 142, 143) verbunden ist,
- jede der Leitungen (141, 144, 142, 143) mit einem Ventil ausgestattet ist, das aus einem der montierten, normalerweise geschlossenen Leistungsverteiler (111, 112, 113, 114) besteht,
- eine Hydraulikleitung (145), die mit dem fünften montierten, normalerweise geöffneten Leistungsverteiler (115) ausgestattet ist, mit jeder der vier Hydraulikleitungen (141, 142, 143, 144) derart verbunden ist, dass sie in zwei Gruppen zu zwei Leitungen (141, 142; 143, 144) isoliert werden.

9. Vorrichtung nach Anspruch 8, ***dadurch gekennzeichnet, dass*** die Steuerungskomponenten (153, 154, 155, 156, 163) bei einer bestimmten Position der Auswahleinrichtung keinen hydraulischen Befehl an die fünf Leistungsverteiler (111, 112, 113, 114, 115) übermitteln, wobei sich folglich die Leistungsverteiler (111, 112, 113, 114, 115) geschlossen in der Ruhestellung befinden, so dass der Leistungskreis (101) gemäß dem ersten Kupplungsmodus konfiguriert wird.

10. Vorrichtung nach Anspruch 8, ***dadurch gekennzeichnet, dass*** bei der einen oder der anderen der beiden bestimmten Positionen der Auswahleinrichtung der fünfte Leistungsverteiler (115) und zwei der anderen Leistungsverteiler (111, 112, 113, 114) von den Steuerungskomponenten (153, 154, 155, 156, 163) übermittelte hydraulische Befehle erhalten, um eine selektive Konfiguration des Leistungskreises gemäß einem von dem zweiten oder dem dritten Kupplungsmodus zu erlauben.

11. Nutzfahrzeug, das mit einer Lenkungssteuerungsvorrichtung gemäß einem der vorhergehenden Ansprüche ausgestattet ist.
